# EUROPEAN PATENT SPECIFICATION

(11) **EP 2 492 877 B1**
(45) Date of publication and mention of the grant of the patent: **29.09.2021**
(21) Application number: 12156453.8
(22) Date of filing: 22.02.2012
(51) Int. Cl.: G07C 9/00

(54) **Electronic key system**
Elektronisches Schlüsselsystem
Système de clé électronique

(30) Priority: 25.02.2011 JP 2011040181
(43) Date of publication of application: 29.08.2012
(73) Proprietor: Kabushiki Kaisha Tokai Rika Denki Seisakusho, Ohguchi-cho Niwa-gun Aichi 480-0195 (JP)
(72) Inventor: Yamashita, Daisuke, Niwa-gun, Aichi 480-0195 (JP); Heya, Takayuki, Niwa-gun,, Aichi 480-0195 (JP)
(74) Representative: TBK

(56) References cited:
- EP-A1- 1 055 789
- EP-B1- 1 510 835
- FR-A1- 2 794 086
- FR-A1- 2 804 545
- US-A1- 2006 244 312
- US-A1- 2007 120 645

## Description

The present invention relates to an electronic key system that performs communication between an electronic key and a vehicle to permit operation of an in-vehicle device in a vehicle.

Electronic key systems are often used in vehicles. An electronic key system uses an electronic key, which is capable of transmitting an ID code through wireless communication to the vehicle, which performs ID verification (refer to, for example, Japanese Laid-Open Patent Publication No. 2005-76329). In such an electronic key system, when the electronic key receives a request from the vehicle, the electronic key automatically returns the ID code in response to the vehicle, which performs ID verification. When ID verification is accomplished outside the vehicle, the electronic key system permits locking and unlocking of the doors. For example, in a state in which the doors are locked, the doors become unlocked by gripping an outside door handle. In a state in which the doors are unlocked, the doors become locked by touching a lock sensor on an outside door handle. When ID verification is performed inside the vehicle, the starting of the engine can be permitted.

The electronic key system described in Japanese Laid-Open Patent Publication No. 2005-76329 uses two transmitters. Each transmitter transmits a request to both the interior and the exterior of the vehicle. This reduces the number of transmitters since transmitters dedicated to the transmission of a request to just one of the interior and exterior of the vehicle are not used. More specifically, the vehicle includes a driver side transmitter, which transmits a request to a driver side vehicle exterior area and driver side vehicle interior area, and a passenger side transmitter, which transmits a request to a passenger side vehicle exterior area and a passenger side vehicle interior area. In the vehicle, the two transmitters form an overlapping communication area. In a communication area, the electronic key returns an ID code in response to a request transmitted from a transmitter. When the electronic key returns an ID code to the communication area formed by the two transmitters, the vehicle determines that the electronic key is located inside the vehicle. When the electronic key returns an ID code to the communication area formed by only one of the two transmitters, the vehicle determines that the electronic key is located outside the vehicle.

In the electronic key system described in Japanese Laid-Open Patent Publication No. 2005-76329, when determining whether the electronic key is located outside the vehicle, an exterior verification communication area is formed by the driver side transmitter or the passenger side transmitter. When determining whether the electronic key is located inside the vehicle, a certain interior verification communication area is formed by the driver side transmitter and the passenger side transmitter. In such an electronic key system that includes transmitters transmitting requests to both the interior and exterior of a vehicle, it is desirable that the time required to locate the electronic key be shortened.

Further conventional electronic key systems are known from the following documents:
The document EP 1 055 789 A1 discloses a control device for locking a vehicle. When the vehicle is locked, the external control unit is adapted to return, in response to an action by the user, a control signal to the ECU, which causes a first interrogation for verifying the presence or absence of the identified subject outside the vehicle, and if the presence of the identified subject is not detected by the external unit, the ECU causes a second interrogation to be caused for verifying the presence or absence of the identified subject inside the vehicle. If again the subject is not identified inside the vehicle, the ECU sends a locking signal to the doors.
The document FR 2 804 545 A discloses an automobile vehicle equipped with a "hands-free" access system with antennas located in passenger grab handles. The automobile vehicle is equipped with a recognition device controlling means of locking the doors of the automobile vehicle. This recognition device is capable of making remote data exchanges with an identification device worn or carried by a user to enable access to the vehicle when the recognition device has authenticated the identification device. The recognition device is connected to at least one antenna located in a passenger grab handle inside the automobile vehicle.
The document US 2007/120645 A1 discloses an on-vehicle equipment control system, in which request signals are transmitted from external transmitters and an internal transmitter to perform mutual communication with a portable device, when vehicle doors have been opened and closed.
The document US 2006/244312 A1 discloses a vehicle door control system which provides increased usability convenience to users by a function for automatically opening and closing vehicle doors.
The document FR 2 794 086 A1 discloses a control device for locking a vehicle, in which first and second interrogations for verifying the presence or absence of the identified subject outside and inside the vehicle are performed via first and second antennas, respectively.

Accordingly, the present invention provides an electronic key system that shortens the time required to locate an electronic key based on a combination of responses from the electronic key sought for by a request from each transmitter.

According to the present invention, there is thus provided an electronic key system, as defined by the appended claims.

In the structure according to the present invention, vehicle exterior determination is performed using the first communication area located at the side the operation means is operated. Vehicle interior determination is performed using the first communication area and the second communication area, which is located at the side opposite to the side at which the operation means is operated. Thus, the vehicle interior determination uses the determination result of the first communication area, which is used for vehicle exterior determination. This reduces the number of communication areas formed to perform vehicle interior determination following the vehicle exterior determination. Accordingly, the time required to determine the position of the electronic key, that is, the time required to perform ID verification can be shortened.

Further, when vehicle exterior determination is performed in the first communication area and the electronic key cannot be located with the vehicle exterior determination, the electronic key is not located outside and inside the vehicle. Thus, the determination ends at this point of time. A communication area is formed only at the side at which the operating means is operated. This reduces the number of communication areas that are formed. Accordingly, the time required for locating the electronic key, that is, the time required to perform ID verification can be shortened.

In a variant of the present invention, the transmitting means includes a first transmitting means, which is arranged at one side of the vehicle, and a second transmitting means, which is arranged at an opposite side of the vehicle. The first communication area and the second communication area include a right side communication area and a left side communication area, the right side communication area is formed by the first transmitting means and includes a vehicle interior area and vehicle exterior area, which is arranged at a right side of the vehicle, and the left side communication area is formed by the second transmitting means and includes a vehicle interior area and a vehicle exterior area, which is arranged at a left side of the vehicle.

In this structure, the determination of whether the electronic key is located inside or outside the vehicle is based on the accomplishment of ID verification in the right communication area, which is formed at the right side of the vehicle, and the left communication area, which is formed at the left side of the vehicle. Thus, in comparison with when locating the electronic key by performing ID verification in each communication area, the accuracy for determining the location of the electronic key can be improved.

In a variant of the present invention, a plurality of electronic keys is registered in the vehicle, the transmitting means attempt ID verification with each of the electronic keys in a predetermined order, and when one of the electronic keys accomplishes the ID verification, the transmitting means attempt a next ID verification from the electronic key that accomplished ID verification.

ID verification is performed in a predetermined order on the electronic key that accomplished the previous ID verification. Thus, the electronic key of which probability of ID verification accomplishment is high can be located at an early stage. This reduces the time required for locating the electronic key.

Other aspects and advantages of the present invention will become apparent from the following description, taken in conjunction with the accompanying drawings, illustrating by way of example the principles of the invention.

The invention and preferred objects and advantages thereof, may best be understood by reference to the following description of the presently preferred embodiments together with the accompanying drawings in which:
Fig. 1 is a schematic block diagram showing an electronic key system;
Fig. 2 is a plan view of a vehicle showing a driver side verification communication area;
Fig. 3 is a plan view of the vehicle showing a passenger side verification communication area and an interior verification communication area;
Fig. 4 is a time chart showing a communication operation of the electronic key system;
Fig. 5 is a time chart showing the communication operation of the electronic key system;
Fig. 6 is a time chart showing the communication operation of the electronic key system;
Fig. 7 is a time chart showing the communication operation of the electronic key system;
Fig. 8 is a flowchart showing a location determination process and operation performed by the electronic key system when a driver side request switch is operated after a user enters the vehicle;
Fig. 9 is a flowchart showing the location determination process and operation performed by the electronic key system when an engine switch is operated and the user is in the vehicle; and
Fig. 10 is a flowchart showing a location determination process and operation performed by the electronic key system when the driver side request switch is operated as the user leaves the vehicle.

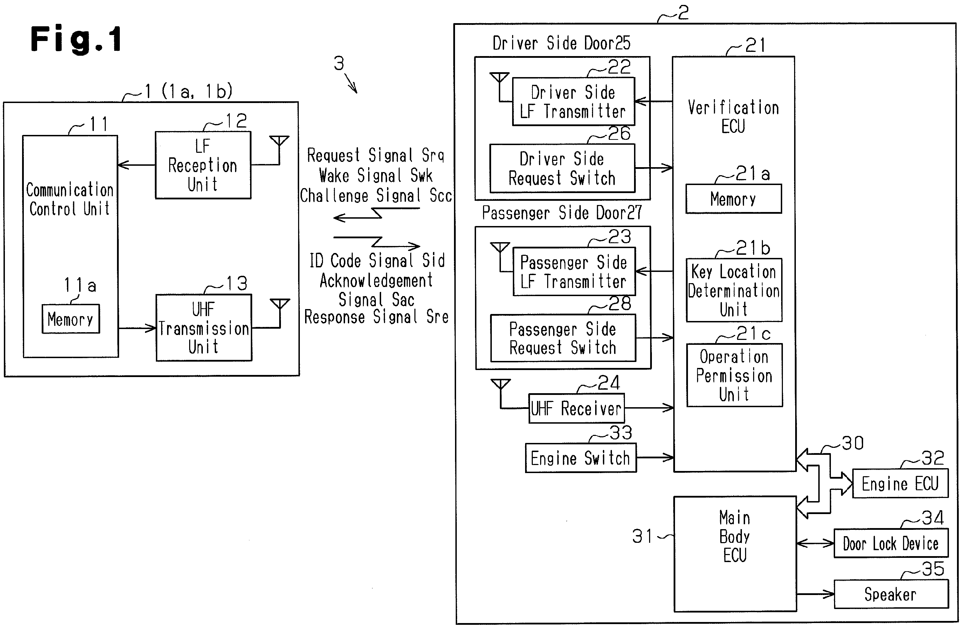

An electronic key system according to one embodiment of the present invention and applied to a vehicle will now be described with reference to Figs. 1 to 10.

As shown in Fig. 1, a vehicle 2 includes an electronic key system 3. The electronic key system 3 allows, for example, a driver to perform vehicle operations, such as the locking of vehicle doors or the starting and stopping of an engine, without the need to actually use a vehicle key. The electronic key system 3 includes an electronic key 1, which serves as the vehicle key and is capable of transmitting a unique ID code through wireless communication. The electronic key system 3 carries out ID verification by performing short range wireless communication (with a communication range of several meters) between the electronic key 1 and the vehicle 2.

The electronic key system 3 is a key-operation-free system that performs ID verification when a door of the vehicle 2 is operated and permits the locking and unlocking of the doors. More specifically, the vehicle 2 includes a verification electronic control unit (ECU) 21 and a main body ECU 31. The verification ECU 21 performs ID verification when short range wireless communication (hereinafter referred to as smart communication) is performed with the electronic key 1. The main body ECU 31 manages the locking and unlocking of the vehicle doors. The verification ECU 21 is connected to a driver side LF transmitter 22, a passenger side LF transmitter 23, and a UHF receiver 24. The driver side LF transmitter 22 is arranged in a driver side door 25 (right door) of the vehicle to transmit a signal on a low frequency (LF) band. The passenger side LF transmitter 23 is arranged in a passenger side door 27 (right door) of the vehicle to transmit a signal on an LF band. The UHF receiver 24 is arranged in a front part of the vehicle interior and receives wireless signals on an ultrahigh frequency (UHF) band. The verification ECU 21 determines whether the electronic key 1 is located inside or outside the vehicle based on a combination of responses from the electronic key 1 that are sought for by request signals Srq transmitted from the LF transmitters 22 and 23 (ID verification accomplishment). The driver side LF transmitter 22 and the passenger side LF transmitter 23 function as a transmitting means. The result of ID verification corresponds to a response result.

The electronic key 1 includes a communication control unit 11, which performs wireless communication with the vehicle 2 in compliance with the electronic key system 3. The communication control unit 11 includes a memory 11a, which stores an ID code that is unique to the electronic key 1. The communication control unit 11 is connected to an LF reception unit 12 and a UHF transmission unit 13. The LF reception unit 12 receives a radio wave on the LF band. The UHF transmission unit 13 transmits a signal on the UHF band in accordance with a command from the communication control unit 11.

A driver side request switch 26 is arranged on the driver side door 25 and operated when the user locks or unlocks the vehicle doors from outside the vehicle 2 at the driver side. Further, a passenger side request switch 28 is arranged on the passenger side door 27 and operated when the user locks or unlocks the vehicle doors from outside the vehicle 2 at the passenger side. The request switches 26 and 28 are momentary type push switches and correspond to an operating means.

When the user is outside the vehicle 2, the verification ECU 21 attempts to establish smart communication by intermittently transmitting a request signal Srq from the driver side LF transmitter 22 and from the passenger side LF transmitter 23 when the driver side request switch 26 or passenger side request switch 28 is operated. When the electronic key 1 receives the request signal Srq with the LF reception unit 12 and smart communication is established, the electronic key 1 returns an ID code signal Sid, which includes the ID code registered in its memory 11a, from the UHF transmission unit 13. Then, the verification ECU 21 verifies the ID code of the received ID code signal Sid with the ID code registered in the memory 21a. When this ID verification is accomplished, the verification ECU 21 determines that the electronic key 1 is located outside the vehicle 2. That is, the verification ECU 21 determines that vehicle exterior verification has been accomplished. In this case, the verification ECU 21 permits the main body ECU 31 to unlock the vehicle doors. In this manner, to unlock the doors, the user only needs to carry the electronic key 1, approach the vehicle 2, and push the driver side request switch 26 or the passenger side request switch 28.

The electronic key system 3 also functions as a smart start system that allows the user to start and stop the engine just by operating a switch without the need to use a vehicle key. The smart start system will now be described. The vehicle 2 includes an engine ECU 32 that executes ignition control and fuel injection control on the engine based on the ID verification result of the verification ECU 21. The engine ECU 32 is connected by an in-vehicle LAN 30 to various types of ECUs, such as the verification ECU 21. An engine switch 33, which is operated to switch the power state (power position) of the vehicle 2, is arranged near the driver seat. The engine switch 33 is connected to the verification ECU 21. The engine switch 33 corresponds to an operation means.

When the engine switch 33 is pushed, the verification ECU 21 sequentially transmits a request signal Srq from the LF transmitters 22 and 23. When ID verification is accomplished with both of the driver side LF transmitter 22 and the passenger side LF transmitter 23, the verification ECU 21 determines that the electronic key 1 is located inside the vehicle 2. That is, the verification ECU 21 determines that vehicle interior verification has been accomplished.

When the verification ECU 21 determines that vehicle interior verification has been accomplished, the verification ECU 21 permits operation of the engine switch 33. When the electronic key 1 is located inside the vehicle 2, the verification ECU 21 switches the power state whenever the engine switch 33 is pushed in the order of ACC ON, IG ON, and power OFF. In a state in which the electronic key 1 is located inside the vehicle 2, the engine is stopped, and the brake pedal is depressed, the verification ECU 21 starts the engine ECU 32 when the engine switch 33 is pushed.

When the verification ECU 21 detects that the request switches 26 and 28 have been operated, the verification ECU 21 first performs vehicle exterior verification to determine whether or not the electronic key 1 is located outside the vehicle 2. When the verification ECU 21 determines that vehicle exterior verification has been accomplished, the verification ECU 21 performs vehicle interior verification to determine whether the electronic key 1 has not been forgotten in the vehicle 2. When the verification ECU 21 determines that vehicle interior verification has not been accomplished and that the electronic key 1 thus has not been forgotten in the vehicle 2, the verification ECU 21 locks the vehicle doors with the main body ECU 31.

The ID verification is encrypted communication in which encryption is performed through challenge-response authentication. In the challenge-response authentication, the vehicle 2 sends a challenge signal Scc to the electronic key 1 during ID verification, the electronic key 1 computes and transmits a response signal Sre in response to the challenge signal Scc, and the vehicle 2 performs a computation on the response signal Sre and determines whether a correct computation can be obtained. When receiving the response signal Sre from the electronic key 1 as a computation result of the challenge signal Scc, the verification ECU 21 verifies the response of the electronic key 1 with a response computed by the verification ECU 21. The verification ECU 21 uses accomplishment of the response verification as one condition for determining whether ID verification has been accomplished.

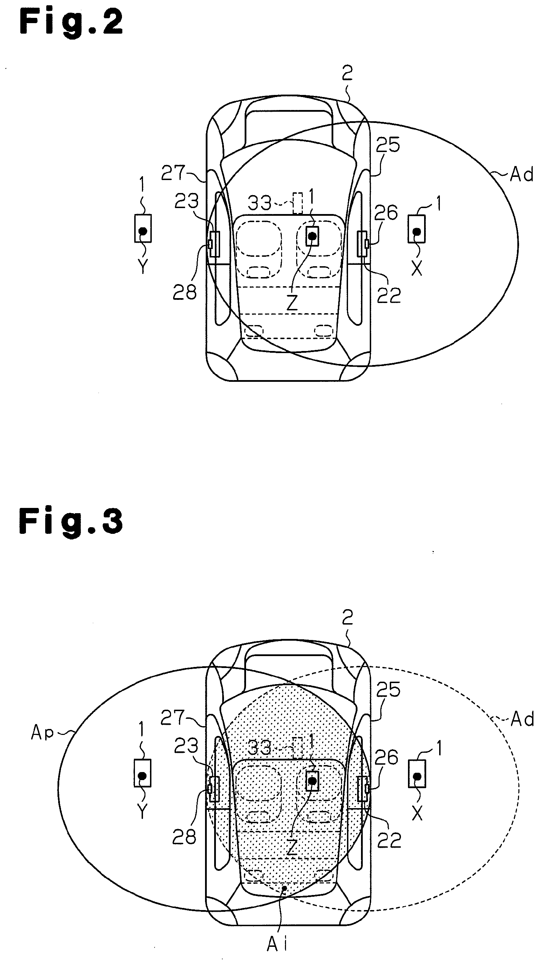

The verification ECU 21 forms communication areas with the LF transmitters 22 and 23. The size of each communication area is the same for vehicle exterior verification and vehicle interior verification. More specifically, the driver side LF transmitter 22 transmits a request signal Srq to form a driver side verification communication area Ad (refer to Fig. 2). The driver side verification communication area Ad is formed around the driver side door 25 and sufficiently includes the vehicle interior and the driver side exterior of the vehicle 2 in the front to rear direction. The passenger side LF transmitter 23 transmits a request signal Srq to form a passenger side verification communication area Ap (refer to Fig. 3). The passenger side verification communication area Ap is formed around the passenger side door 27 and sufficiently includes the vehicle interior and the passenger side exterior of the vehicle 2 in the front to rear direction. The driver side verification communication area Ad and the passenger side verification communication area Ap partially overlap each other in the vehicle interior. The overlapping region is referred to as a vehicle interior verification communication area Ai. The driver side verification communication area Ad corresponds to a right communication area, and the passenger side verification communication area Ap corresponds to a left communication area. Further, the driver side verification communication area Ad and the passenger side verification communication area Ap correspond to a first communication area and a second communication area, respectively.

The verification ECU 21 includes a key location determination unit 21b, which determines whether the electronic key 1 is located inside or outside the vehicle 2 during a door lock operation. In this example, when vehicle exterior verification is accomplished during a door lock operation, the key location determination unit 21b forms a communication area with the one of the LF transmitters 22 and 23 arranged opposite to the side at which the door lock operation was performed, executes vehicle interior verification, and determines that the electronic key 1 has not been left inside the vehicle 2 when vehicle interior verification is not accomplished. If vehicle interior verification is accomplished when a communication area is formed with the one of the LF transmitters 22 and 23 arranged opposite to the side at which the door lock operation was performed, the key location determination unit 21b forms a communication area again with the transmitter arranged at the side at which the door lock operation was performed to execute vehicle interior verification and determines whether the electronic key 1 has been forgotten in the vehicle 2. The key location determination unit 21b functions as a determining means.

The verification ECU 21 includes an operation permission unit 21c that permits operation of door locks, the engine, and the like based on the location of the electronic key 1 determined by the key location determination unit 21b. When the key location determination unit 21b determines that the electronic key 1 is located outside the vehicle 2 and not inside the vehicle 2, the operation permission unit 21c permits locking of the vehicle doors. When the electronic key 1 has been forgotten inside the vehicle during a door locking operation, the verification ECU 21 notifies the user that the electronic key is located inside the vehicle 2. In this case, the verification ECU 21 outputs a voice message, such as "electronic key in vehicle" from a speaker 35. The door locks and the engine correspond to in-vehicle devices.

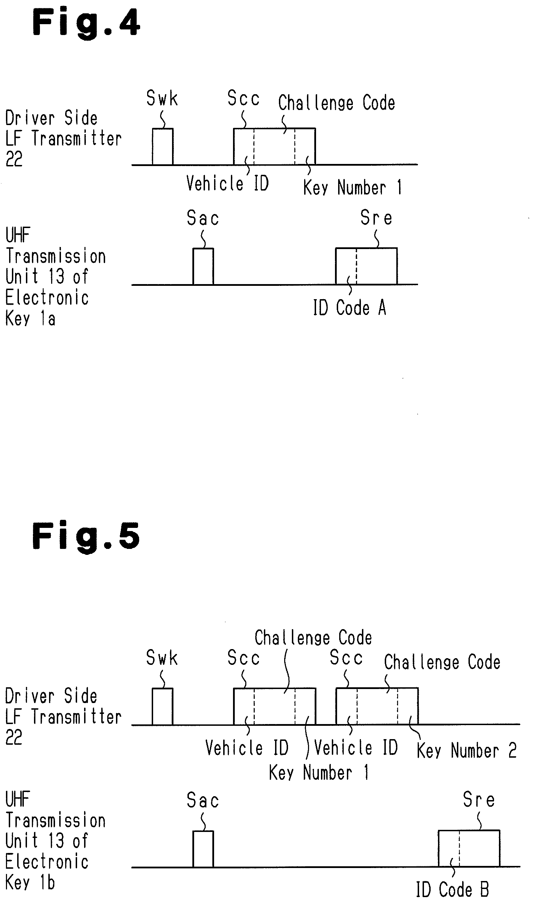

The basic operation of the electronic key system 3 in the present example will now be described with reference to Fig. 4. Here, the description will be given using the driver side LF transmitter 22, and the passenger side LF transmitter 23 will not be described since the processes are the same except in that the driver side and passenger side are reversed.

As shown in Fig. 4, when the verification ECU 21 performs smart communication with the electronic key 1, the verification ECU 21 transmits a wake signal Swk from the driver side LF transmitter 22 to activate the electronic key 1, which is in an inactive state (sleep state). The driver side LF transmitter 22 repetitively transmits the wake signal Swk in constant intervals. Thus, the presence of the electronic key 1 inside and outside the vehicle 2 is monitored.

When the electronic key 1 is located in the driver side verification communication area Ad of the wake signal Swk from the driver side LF transmitter 22, the LF reception unit 12 performs wake verification. When determining that wake verification has been accomplished, the LF reception unit 12 switches the communication control unit 11 from a sleep state (standby state) to an active state. When switching to the active state, the communication control unit 11 transmits an acknowledgement signal Sac from the UHF transmission unit 13.

When the vehicle 2 receives the acknowledgement signal Sac within a predetermined period from the transmission of the wake signal Swk, the vehicle 2 recognizes the presence of the electronic key 1 in the passenger side verification communication area Ad and transmits the challenge signal Scc from the driver side LF transmitter 22. The challenge signal Scc includes a vehicle ID, which is unique to the vehicle 2 and used to identify the vehicle 2, a challenge code, the value of which is varied whenever transmitted, and a key number of the electronic key 1. The key number indicates a sequential number of the key.

When receiving the challenge signal Scc, the electronic key 1 verifies the vehicle ID with a vehicle ID registered in the memory 11a. When the vehicle IDs are in conformance, the electronic key 1 executes number verification to determine whether the key number is correct thereby indicating that the electronic key 1 is the intended communication peer. The number verification is performed to determine the key type of the electronic key 1, which is the communication peer. When the number verification is accomplished, the communication control unit 11 computes a challenge code with its encryption key to generate a response code. When generation of the response code ends, the communication control unit 11 transmits the ID code, which is registered in its memory 11a, and a response signal Sre, which includes the response code, from the UHF transmission unit 13. The order in which the ID code and response code are arranged in the response signal Sre can be changed as required.

When transmitting the challenge signal Scc, the verification ECU 21 computes a challenge code with its encryption key to generate a response code. When receiving the response signal Sre from the electronic key 1 with the UHF receiver 24, the verification ECU 21 verifies the response code of the electronic key 1 with the response code it computed to perform response verification. When determining that the response verification has been accomplished, the verification ECU 21 verifies the ID code in the response signal Sre with the ID code registered in the memory 11a to perform ID verification.

A plurality of electronic keys 1 (1a, 1b, etc.) are registered in the electronic key system 3. When the second electronic key 1b is present in the driver side verification communication area Ad and not in the first electronic key 1a, the verification ECU 21 operates in the following manner. The verification ECU 21 determines the presence of the electronic key 1 in a predetermined order of registration. The verification ECU 21 gives priority to the electronic key 1 that has accomplished the previous ID verification and determines the presence of the electronic key 1 that accomplishes ID verification.

As shown in Fig. 5, the verification ECU 21 transmits a challenge signal Scc, which includes key number 1 corresponding to the first electronic key 1a, from the driver side LF transmitter 22. When the UHF receiver 24 does not receive a response signal Sre within a predetermined time, the verification ECU 21 transmits a challenge signal Scc that includes key number 2 corresponding to the second electronic key 1b from the driver side LF transmitter 22. When the second electronic key 1b receives the corresponding challenge signal Scc with the LF reception unit 12, the electronic key 1b transmits a response signal Sre, which includes its ID code, from the UHF transmission unit 13. Then, in the same manner as described above, the verification ECU 21 performs ID verification.

The location determination of the electronic key 1 and operation permission of an in-vehicle device performed by communication operation of the electronic key system 3 will now be described with reference to Figs. 1 to 10. Here, the description will be given for when the driver side request switch 26 is operated but not for when the passenger side request switch 28 is operated since the processes are the same except in that the driver side and passenger side are reversed.

First, the operation of the electronic key system 3 performed when the user enters the vehicle 2 will be described.

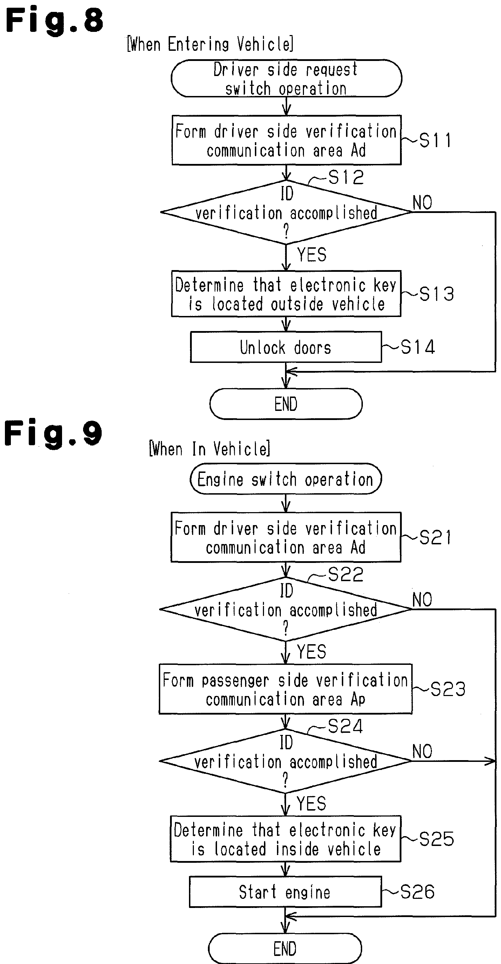

Referring to Fig. 8, when the user enters the vehicle 2, which is in a parked state (i.e., engine stopped and vehicle doors locked), the user approaches the driver side of the vehicle 2. In a state in which the electronic key 1 is located at position X, which is shown in Fig. 2, the user operates the driver side request switch 26. The operated driver side request switch 26 sends an operation signal to the verification ECU 21. Referring to Fig. 4, when receiving the operation signal, the verification ECU 21 transmits a request signal Srq (wake signal Swk) from the driver side LF transmitter 22 to form a driver side verification communication area Ad (step S11). The electronic key 1 is located in the driver side verification communication area Ad and thus transmits an acknowledgment signal Sac from the UHF transmission unit 13 in response to the wake signal Swk received by the LF reception unit 12. In response to the acknowledgment signal Sac, the verification ECU 21 transmits a challenge signal Scc from the driver side LF transmitter 22. In response to the challenge signal Scc, the electronic key 1 transmits an ID code signal Sid (response signal Sre) from the UHF transmission unit 13.

As shown in Fig. 8, the verification ECU 21 uses the ID code included in the received response signal Sre to perform ID verification (step S12). When the ID verification (vehicle exterior verification) is accomplished (step S12: YES), the verification ECU 21 determines that the electronic key 1 is located outside the vehicle 2 (step S13). In this state, it is assumed that the vehicle doors are locked and the electronic key 1 is not located in the vehicle 2. Thus, the verification ECU 21 determines that the electronic key 1 is located outside the vehicle 2 since the electronic key 1 is present in the driver side verification communication area Ad. Then, the verification ECU 21 unlocks the vehicle doors with a door lock device 34 through the main body ECU 31 (step S14). More specifically, the main body ECU 31 permits unlocking of the vehicle doors with the door lock device 34. When ID verification is not accomplished in the driver side verification communication area Ad (step S12: NO), the verification ECU 21 ends processing. In other words, the verification ECU 21 does not permit operation of the door lock device 34.

In a state in which the electronic key 1 is located at position Y, which is shown in Fig. 3, when the user operates the passenger side request switch 28, the verification ECU 21 transmits a request signal Srq (wake signal Swk) from the passenger side LF transmitter 23. Thus, the verification ECU 21 forms the passenger side verification communication area Ap and performs location determination of the electronic key 1 and operation permission of the door lock device 34 in the same manner as described above.

The operation of the electronic key system 3 when the user is in the vehicle 2 will now be described.

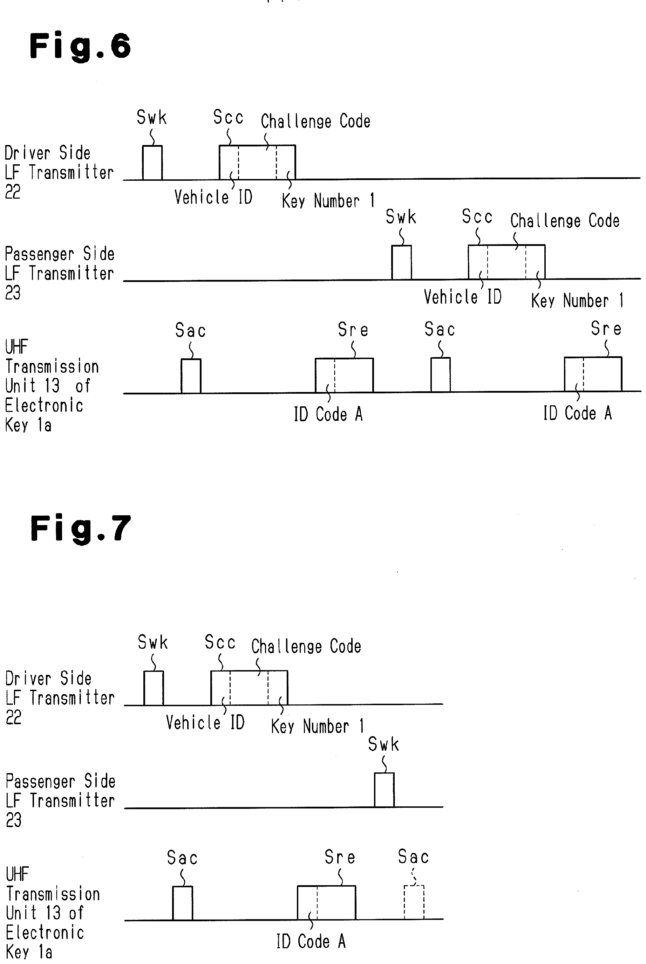

Referring to Fig. 9, it is assumed here that the user is in the vehicle 2 and operates the engine switch 33 when the electronic key 1 is located at position Z, which is shown in Fig. 3. The operated engine switch 33 sends an operation signal to the verification ECU 21. As shown in Fig. 6, when receiving the operation signal, the verification ECU 21 transmits a request signal Srq (wake signal Swk) with a relatively weak output from the driver side LF transmitter 22 to form a driver side verification communication area Ad and perform vehicle interior verification (step S21). The electronic key 1 is located in the passenger side verification communication area Ad and thus transmits an acknowledgement signal Sac from the UHF transmission unit 13 in response to the wake signal Swk received by the LF reception unit 12. In response to the acknowledgement signal Sac, the verification ECU 21 transmits a challenge signal Scc from the driver side LF transmitter 22. In response to the challenge signal Scc, the electronic key 1 transmits an ID code signal Sid (response signal Sre) from the UHF transmission unit 13.

Then, as shown in Fig. 9, the verification ECU 21 performs ID verification using an ID code that is included in the received response signal Sre (step S22). When the ID verification is accomplished (step S22: YES), as shown in Fig. 6, the verification ECU 21 transmits a request signal Srq (wake signal Swk) from the passenger side LF transmitter 23 to form a passenger side verification communication area Ap (step S23). The electronic key 1 is located in the passenger side verification communication area Ap. Thus, in response to the wake signal Swk received by the LF reception unit 12, the electronic key 1 transmits the acknowledgement signal Sac from the UHF transmission unit 13. In response to the acknowledgment signal Sac, the verification ECU 21 transmits a challenge signal Scc from the passenger side LF transmitter 23. In response to the challenge signal Scc, the electronic key 1 transmits an ID code signal Sid (response signal Sre) from the UHF transmission unit 13. When ID verification is not accomplished in the driver side verification communication area Ad, the verification ECU 21 ends processing. Thus, the key location determination unit 21b determines that the electronic key 1 is not located inside the vehicle 2.

Subsequently, as shown in Fig. 9, the verification ECU 21 performs ID verification using an ID code that is included in the received response signal Sre (step S24). When the ID verification is accomplished (step S24: YES), as shown in Fig. 6, the verification ECU 21 determines that the electronic key 1 is located inside the vehicle 2 (step S25). More specifically, since the electronic key 1 is located in the vehicle interior verification area Ai, which is where the driver side verification communication area Ad and the passenger side verification communication area Ap overlap with each other, the verification ECU 21 determines that the electronic key 1 is located inside the vehicle 2 (vehicle interior verification accomplished). Then, the verification ECU 21 starts the engine with the engine ECU 32 (step S26). That is, the engine ECU 32 starts the engine. When ID verification is not accomplished in the passenger side verification communication area Ap (step S24: NO), the verification ECU 21 ends processing. Thus, the verification ECU 21 does not permit operation of the engine ECU 32.

The operation of the electronic key system 3 when the user leaves the vehicle 2 will now be described.

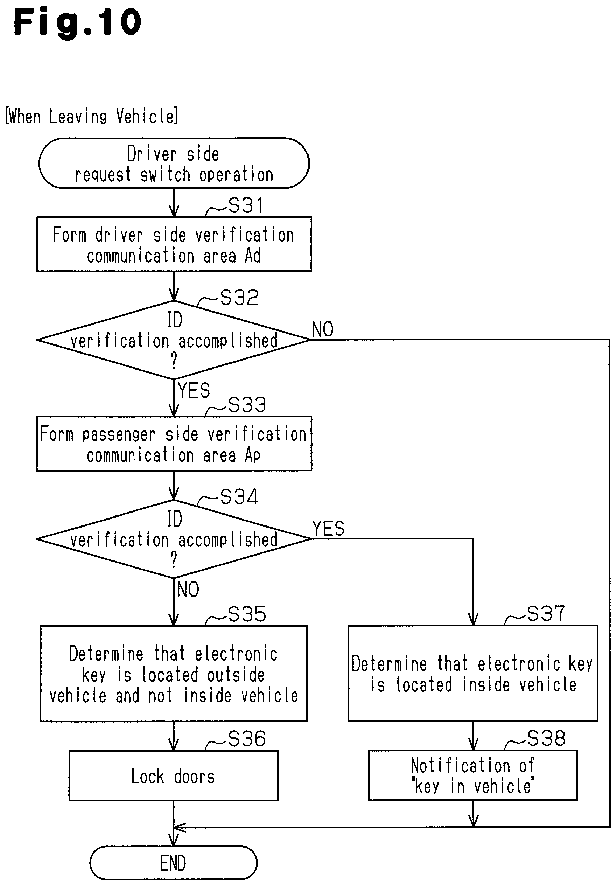

Referring to Fig. 10, it is assumed here that the user operates the driver side request switch 26 when leaving the vehicle 2 in a state in which the electronic key 1 is located at position X, which is shown in Fig. 2. The operated driver side request switch 26 sends an operation signal to the verification ECU 21. As shown in Fig. 7, when receiving the operation signal, the verification ECU 21 transmits a request signal Srq (wake signal Swk) from the driver side LF transmitter 22 to form a driver side verification communication area Ad (step S31). The electronic key 1 is located in the driver side verification communication area Ad and thus transmits an acknowledgement signal Sac from the UHF transmission unit 13 in response to the wake signal Swk received by the LF reception unit 12. In response to the acknowledgement signal Sac, the verification ECU 21 transmits a challenge signal Scc from the driver side LF transmitter 22. In response to the challenge signal Scc, the electronic key 1 transmits an ID code signal Sid (response signal Sre) from the UHF transmission unit 13.

Then, as shown in Fig. 10, the verification ECU 21 performs ID verification using an ID code that is included in the received response signal Sre (step S32). When the ID verification is accomplished (step S32: YES), as shown in Fig. 7, the verification ECU 21 performs vehicle interior verification to determine whether the electronic key 1 has been forgotten inside the vehicle 2. The vehicle interior verification uses the ID verification performed as vehicle exterior verification that has been performed in the driver side verification communication area Ad. More specifically, the verification ECU 21 of this example transmits a request signal Srq (wake signal Swk) from the passenger side LF transmitter 23 to form a passenger side verification communication area Ap (step S33). The electronic key 1 is not located in the passenger side verification communication area Ap, does not receive the wake signal Swk with the LF reception unit 12, and does not transmit an acknowledgement signal Sac. Since the acknowledgement signal Sax is not received from the electronic key 1, ID verification is not accomplished (step S34: NO), and the verification ECU 21 determines that the electronic key 1 is located outside the vehicle 2 and not inside the vehicle 2 (step S35). More specifically, since the electronic key 1 is located in the driver side verification communication area Ad and not in the passenger side verification communication area Ap, the location determination unit 21b determines that the electronic key 1 is located outside the vehicle 2 and not inside the vehicle 2. Then, the verification ECU 21 locks the vehicle doors with the door lock device 34 through the main body ECU 31 (step S36). Thus, the operation permission unit 21c permits locking of the vehicle doors with the door lock device 34.

It will now be assumed that the user operates the driver side request switch 26 when the user leaves the vehicle 2 but forgets the electronic key 1 in the vehicle 2, for example, at position Z, which is shown in Fig. 2. In this case, referring to Fig. 10, ID verification is accomplished in the driver side verification communication area Ad (step S32: YES) and in the passenger side verification communication area Ap (step S34: YES). Since ID verification is accomplished in the driver side verification communication area Ad and the passenger side verification communication area Ap, the electronic key 1 is located in the vehicle interior verification communication area Ai, which is where the driver side verification communication area Ad and the passenger side verification communication area Ap overlap with each other. Thus, the key location determination unit 21b determines that the electronic key 1 has been forgotten in the vehicle 2 (step S37).

Then, the verification ECU 21 generates a voice message, such as "electronic key in vehicle" from the speaker 35 to notify the user of the key location (step S38). In this manner, the operation permission unit 21c permits the generation of a notification with the speaker 35.

Here, it is assumed that when the user leaves the vehicle 2, a different vehicle occupant also leaves the vehicle 2 at the same time while carrying a sub-key (electronic key 1). Thus, when the user operates the driver side request switch 26, an electronic key 1 is also located at position Y, which is shown in Fig. 3. In this case, ID verification is accomplished in the driver side verification communication area Ad (step S32: YES), and processing is performed in the same manner as described above.

More specifically, after performing verification with the driver side LF transmitter 22, the key location determination unit 21b transmits a request signal Srq (wake signal Swk) from the passenger side LF transmitter 23 and performs ID verification. In this case, the sub-key is located at the passenger side. Thus, ID verification is accomplished with the key number of the sub-key. However, ID verification is not accomplished with the key number of the master key. In this manner, ID verification is accomplished for each key in only one of the communication areas. Thus, the key location determination unit 21b determines that an electronic key 1 is not present in the vehicle 2. The verification ECU 21 determines that ID verification is accomplished in the driver side verification communication area Ad but not in the passenger side verification communication area Ap and thereby permits locking of the vehicle doors.

For example, when the driver side request switch 26 is operated, the accomplishment of ID verification in the driver side verification communication area Ad formed by the driver side LF transmitter 22, which is located at the operated side, is determined. Then, vehicle interior determination is performed based on the ID verification result in the driver side verification communication area Ad and the accomplishment of ID verification in the passenger side verification communication area Ap formed by the passenger side LF transmitter 23, which is located at the side opposite to the operated side. When ID verification is accomplished in the driver side verification communication area Ad but not in the passenger side verification communication area Ap, it is determined that the electronic key 1 has not been forgotten in the vehicle 2 and the locking of the vehicle doors is permitted. This can reduce the number of times communication is performed and thereby reduce the communication time required for ID verification.

The above embodiment has the advantages described below.
(1) Vehicle exterior determination is performed using the driver side verification communication area Ad (Ap) located at the side the driver side request switch 26 (28) is operated. Vehicle interior determination is performed using the driver side verification communication area Ad (Ap) and the passenger side verification communication area Ap (Ad), which is located at the side opposite to the driver side request switch 26 (28). In this manner, the vehicle interior determination uses the determination result of the driver side verification communication area Ad, which is used for vehicle exterior determination. This reduces the number of communication areas formed to perform vehicle interior determination following the vehicle exterior determination. Accordingly, the time required to determine the position of the electronic key 1, that is, the time required to perform ID verification can be shortened.
(2) When vehicle exterior determination is performed in the driver side verification communication area Ad (Ap) and the electronic key 1 cannot be located with the determination, the electronic key 1 is not located outside and inside the vehicle 2. Thus, the determination ends at this point of time. A communication area is formed only at the side at which the driver side request switch 26 (28) is operated. This reduces the number of communication areas that are formed. Accordingly, the time required for locating the electronic key 1, that is, the time required to perform ID verification can be shortened.
(3) The determination of whether the electronic key 1 is located inside or outside the vehicle 2 is based on the accomplishment of ID verification in two communication areas, namely, the driver side verification communication area Ad, which is formed at the right side of the vehicle 2, and the passenger side verification communication area Ap, which is formed at the left side of the vehicle 2. Thus, in comparison with when locating the electronic key 1 by performing ID verification in each communication area, the accuracy for determining the location of the electronic key 1 can be improved.
(4) ID verification is performed in a predetermined order on the electronic key 1 that accomplished the previous ID verification. Thus, the electronic key 1 of which probability of ID verification accomplishment is high can be located at an early stage. This reduces the time required for locating the electronic key 1.
(5) The request switches 26 and 28 are respectively arranged on the driver side door 25 and the passenger side door 27. This forms a communication area in a middle part of the vehicle 2 with respect to the front to rear direction and ensures that the electronic key 1 is located in the verification communication areas Ad and Ap when the user, who is carrying the electronic key 1, operates the request switches 26 and 28.
(6) After determining that the electronic key 1 is located in the communication area from the acknowledgement signal Sa to the wake signal Swk, the verification ECU 21 receives a response signal Sre for a challenge signal Scc and performs ID verification. Thus, when the electronic key 1 is not located in a communication area, it can be determined that the electronic key 1 is not present just with a wake signal Swk. This shortens the communication time.

Particularly, it should be understood that the present invention may be embodied in the following forms.

In the above embodiment, the driver side LF transmitter 22 is arranged in the driver side door 25, and the passenger side LF transmitter 23 is arranged in the passenger side door 27. However, the LF transmitters 22 and 23 may each be arranged on a pillar. For example, the LF transmitters 22 and 23 may be arranged on B-pillars (center pillars), which are arranged at the middle part of the vehicle 2 with respect to the front to rear direction.

In the above embodiment, when a plurality of electronic keys 1 are registered in the verification ECU 21, ID verification is performed on the electronic key 1 in a predetermined order. However, ID verification may be performed on the electronic key 1 in any order.

In the above embodiment, when the engine switch 33 is pushed, ID verification is performed in the driver side verification communication area Ad and then in the passenger side verification communication area Ap. Instead, ID verification may be performed in the passenger side verification communication area Ap and then in the driver side verification communication area Ad.

In the above embodiment, a communication area is formed for each of the driver side and passenger side of the vehicle 2 with the driver side LF transmitter 22 and the passenger side LF transmitter 23. However, the LF transmitters 22 and 23 do not have to form communication areas in the left and right sides and may form communication areas in the front and rear sides as long as the vehicle interior and vehicle exterior are included in each communication area.

In the above embodiment, when ID verification is not accomplished in, for example, the driver side verification communication area Ad, which is the operated side, the electronic key 1 is not located inside or outside the vehicle 2. Thus, the determination ends. However, even if the electronic key 1 is determined as not being present during the vehicle exterior determination, the vehicle interior determination can be subsequently performed just in case.

In the above embodiment, the request switches 26 and 28 are operated when locking and unlocking the vehicle doors. Instead, a locking switch, which locks the vehicle doors, and an unlocking switch, which unlocks the vehicle doors, may be used.

In the above embodiment, the challenge signal Scc includes a vehicle ID and a challenge code. However, a vehicle signal including a vehicle ID may be additionally transmitted, and a challenge signal Scc including a challenge code Scc may be transmitted when an acknowledgement signal Sac is returned in response to the vehicle signal. In this case, when the electronic key 1 does not correspond to the vehicle 2, communication can be ended without receiving the challenge code.

In the above embodiment, the result of ID verification is the response result. However, the response result may be based on whether or not there is a response of a wireless signal from the electronic key 1.

In the above embodiment, the frequency of the wireless signals used by the electronic key system 3 is not necessarily limited to the LF and UHF bands, and other frequencies may be used. Further, the frequency of the wireless signal transmitted from the vehicle 2 to the electronic key 1 and the frequency of the wireless signal returned from the electronic key 1 to the vehicle 2 do not necessarily have to be different and may be the same.

In the above embodiment, the speaker 35 generates a message indicating that the electronic key 1 is located in the vehicle 2. Instead, for example, a buzzer may make a sound or a light may be illuminated to indicate that the electronic key 1 is located in the vehicle 2.

In the above embodiment, the electronic key system does not have to use communication from the vehicle 2 as a trigger for performing ID verification and may use communication from the electronic key 1 as such a trigger.

In the above embodiment, the LF transmitters 22 and 23 may be arranged at any location.

In the above embodiment, there may be any number of LF transmitters 22 and 23.

In the above embodiment, the key location determination does not have to be performed when the vehicle doors are locked and unlocked and when the engine is stopped and may be performed under only one of these situations.

An electronic key system (1) that reduces the time for locating an electronic key from responses from the electronic key sought for by requests from LF transmitters (22, 23). The electronic key system checks a combination of responses from the electronic key to perform ID verification. The electronic key system includes a key location determination unit (21b) that forms a driver side communication area (Ad) when a request switch (26) is operated to perform exterior determination and determine whether the electronic key is located outside a vehicle based on a response from the electronic key in the driver side communication area (Ad). Then, the key location determination unit forms a passenger side communication area (Ap) to perform interior determination and determine whether the electronic key is located inside the vehicle based on responses from the electronic key in the driver and passenger side communication areas (Ad, Ap).

## Claims

1. An electronic key system for a vehicle, the electronic key system comprising:
an electronic key (1);
a plurality of transmitting means (22, 23) arranged in the vehicle, wherein each of the transmitting means is configured to transmit a request for starting ID verification to the electronic key (1) and to form a communication area including a region that overlaps part of a communication area formed by another one of the transmitting means, one of the transmitting means (22) being configured to form a first communication area (Ad) including a vehicle interior area and a first vehicle exterior area, which is formed at a driver side of the vehicle, and another one of the transmitting means (23) being configured to form a second communication area (Ap) including a vehicle interior area and a second vehicle exterior area, which is formed at a passenger side of the vehicle, wherein the electronic key system is configured to check a combination of responses from the electronic key sought for by the request from each of the transmitting means to perform the ID verification while determining where the electronic key is located;
an operating means (26, 28, 33) operated when actuating an in-vehicle device of the vehicle, wherein the operating means is configured to cause to transmit the request from a corresponding one of the plurality of transmitting means when the operating means is operated; and
a determining means (21b) for determining whether or not the electronic key is located outside the vehicle by performing vehicle exterior determination and for determining whether or not the electronic key is located inside the vehicle by performing vehicle interior determination, wherein
the determining means (21b) is configured, for performing the vehicle exterior determination, to cause the transmitting means (22) corresponding to the operated operating means to form the first communication area (Ad), when the operating means is operated, and to determine whether or not ID verification is accomplished based on a response result of the electronic key in the first communication area,
the determining means (21b) is configured, for performing the vehicle interior determination, to cause the transmitting means (22) corresponding to the operated operating means to form the first communication area (Ad), when the operating means is operated, and to determine whether or not ID verification is accomplished based on a response result of the electronic key in the first communication area, and, after determining accomplishment of ID verification, to cause the transmitting means (23) that differs from the transmitting means corresponding to the operated operating means to form the second communication area (Ap), and to determine whether or not ID verification is accomplished based on a response result of the electronic key in the second communication area, and
the determining means (21b) is configured to determine that the electronic key is not located in the vehicle when determining accomplishment of ID verification from the response result of the electronic key in the first communication area and non-accomplishment of ID verification from the response result of the electronic key in the second communication area.

2. The electronic key system according to claim 1, wherein:
the transmitting means (22, 23) includes a first transmitting means (22), which is arranged at one side of the vehicle, and a second transmitting means (23), which is arranged at an opposite side of the vehicle, and
the first communication area and the second communication area include a right side communication area (Ad) and a left side communication area (Ap), the right side communication area is formed by the first transmitting means (22) and includes a vehicle interior area and vehicle exterior area, which is arranged at a right side of the vehicle, and the left side communication area is formed by the second transmitting means (23) and includes a vehicle interior area and a vehicle exterior area, which is arranged at a left side of the vehicle.

3. The electronic key system according to claim 1 or 2, wherein:
a plurality of electronic keys is registered in the vehicle,
the transmitting means (22, 23) is configured to attempt ID verification with each of the electronic keys in a predetermined order, and
when one of the electronic keys accomplishes the ID verification, the transmitting means is configured to attempt a next ID verification from the electronic key that accomplished ID verification.

4. The electronic key system according to any one of claims 1 to 3, wherein the operating means (26, 28, 33) includes a first operating means (26), which is arranged proximal to a driver side door, and a second operating means (28), which is arranged proximal to a passenger side door.

5. The electronic key system according to any one of claims 1 to 4, wherein:
the in-vehicle device includes an engine ECU (32),
the operation means (26, 28, 33) includes an engine switch (33), and
the determining means (21b) is configured to determine that the electronic key is located inside the vehicle when the engine switch (33) is operated to actuate the engine ECU (32), accomplishment of ID verification is determined from the response result of the electronic key in the first communication area, and accomplishment of ID verification is determined from the response result of the electronic key in the second communication area.

6. The electronic key system according to any one of claims 1 to 4, wherein:
the in-vehicle device is a door lock device (34), and
the determining means (21b) is configured to determine that the electronic key is not located inside the vehicle when the operating means (26, 28) is operated to actuate the door lock device (34) and perform locking, accomplishment of ID verification is determined from the response result of the electronic key in the first communication area, and non-accomplishment of ID verification is determined from the response result of the electronic key in the second communication area.

7. The electronic key system according to any one of claims 1 to 4, wherein:
the in-vehicle device is a door lock device (34), and
the determining means (21b) is configured to determine that the electronic key has been forgotten in the vehicle when the operating means (26, 28) is operated to actuate the door lock device (34) and perform locking, accomplishment of ID verification is determined from the response result of the electronic key in the first communication area, and accomplishment of ID verification is determined from the response result of the electronic key in the second communication area.

## Patentansprüche

1. Elektronikschlüsselsystem für ein Fahrzeug, wobei das Elektronikschlüsselsystem aufweist:
einen elektronischen Schlüssel (1);
eine Vielzahl von Sendeeinrichtungen (22, 23), die in dem Fahrzeug eingerichtet sind, wobei jede der Sendeeinrichtungen konfiguriert ist zum Senden einer Anforderung zum Starten einer ID-Verifikation an den elektronischen Schlüssel (1) und zum Bilden eines Kommunikationsbereichs, der ein Gebiet umfasst, das einen Teil eines Kommunikationsbereichs überlappt, der durch eine andere der Sendeeinrichtungen gebildet wird, wobei eine der Sendeeinrichtungen (22) konfiguriert ist zum Bilden eines ersten Kommunikationsbereichs (Ad), der einen Fahrzeuginnenbereich und einen ersten Fahrzeugaußenbereich umfasst, der auf einer Fahrerseite des Fahrzeugs gebildet wird, und eine andere der Sendeeinrichtungen (23) konfiguriert ist zum Bilden eines zweiten Kommunikationsbereichs (Ap), der einen Fahrzeuginnenbereich und einen zweiten Fahrzeugaußenbereich umfasst, der auf einer Beifahrerseite des Fahrzeugs gebildet wird, wobei das Elektronikschlüsselsystem konfiguriert ist zum Prüfen einer Kombination von Antworten von dem elektronischen Schlüssel, nach denen durch die Anforderung von jeder der Sendeeinrichtungen gefragt wird, um die ID-Verifikation durchzuführen, während bestimmt wird, wo sich der elektronische Schlüssel befindet;
eine Bedieneinrichtung (26, 28, 33), die bei Betätigung einer fahrzeugeigenen Vorrichtung des Fahrzeugs bedient wird, wenn die Fahrzeugfahrvorrichtung des Fahrzeugs betätigt wird, wobei die Bedieneinrichtung konfiguriert ist zum Veranlassen, dass die Anforderung von einer entsprechenden der Vielzahl von Sendeeinrichtungen gesendet wird, wenn die Bedieneinrichtung bedient wird; und
eine Bestimmungseinrichtung (21b) zum Bestimmen, ob sich der elektronische Schlüssel außerhalb des Fahrzeugs befindet oder nicht, indem eine Fahrzeugaußenbestimmung durchgeführt wird, und zum Bestimmen, ob sich der elektronische Schlüssel innerhalb des Fahrzeugs befindet oder nicht, indem eine Fahrzeuginnenbestimmung durchgeführt wird, wobei
die Bestimmungseinrichtung (21b) konfiguriert ist, um die Fahrzeugaußenbestimmung durchzuführen, zum Veranlassen der Sendeeinrichtung (22), die der bedienten Bedieneinrichtung entspricht, zum Bilden des ersten Kommunikationsbereichs (Ad), wenn die Bedieneinrichtung bedient wird, und zum Bestimmen, ob eine ID-Verifikation bewerkstelligt wird oder nicht, basierend auf einem Antwortergebnis des elektronischen Schlüssels in dem ersten Kommunikationsbereich,
die Bestimmungseinrichtung (21b) konfiguriert ist, um die Fahrzeuginnenbestimmung durchzuführen, zum Veranlassen der Sendeeinrichtung (22), die der bedienten Bedieneinrichtung entspricht, zum Bilden des ersten Kommunikationsbereichs (Ad), wenn die Bedieneinrichtung bedient wird, und zum Bestimmen, ob eine ID-Verifikation bewerkstelligt wird oder nicht, basierend auf einem Antwortergebnis des elektronischen Schlüssels in dem ersten Kommunikationsbereich, und, nach Bestimmen eines Bewerkstelligens einer ID-Verifikation, zum Veranlassen der Sendeeinrichtung (23), die von der Sendeeinrichtung verschieden ist, die der bedienten Bedieneinrichtung entspricht, zum Bilden des zweiten Kommunikationsbereichs (Ap) und zum Bestimmen, ob eine ID-Verifikation bewerkstelligt wird oder nicht, basierend auf einem Antwortergebnis des elektronischen Schlüssels in dem zweiten Kommunikationsbereich, und
die Bestimmungseinrichtung (21b) konfiguriert ist zum Bestimmen, dass sich der elektronische Schlüssel nicht in dem Fahrzeug befindet, wenn ein Bewerkstelligen einer ID-Verifikation aus dem Antwortergebnis des elektronischen Schlüssels in dem ersten Kommunikationsbereich und ein Nichtbewerkstelligen einer ID-Verifikation aus dem Antwortergebnis des elektronischen Schlüssels in dem zweiten Kommunikationsbereich bestimmt wird.

2. Elektronikschlüsselsystem gemäß Anspruch 1, wobei:
die Sendeeinrichtungen (22, 23) eine erste Sendeeinrichtung (22), die auf einer Seite des Fahrzeugs eingerichtet ist, und eine zweite Sendeeinrichtung (23), die auf einer gegenüberliegenden Seite des Fahrzeugs eingerichtet ist, umfassen, und
der erste Kommunikationsbereich und der zweite Kommunikationsbereich einen rechtsseitigen Kommunikationsbereich (Ad) und einen linksseitigen Kommunikationsbereich (Ap) umfassen, der rechtsseitige Kommunikationsbereich durch die erste Sendeeinrichtung (22) gebildet wird und einen Fahrzeuginnenbereich und einen Fahrzeugaußenbereich umfasst, der auf einer rechten Seite des Fahrzeugs angeordnet ist, und der linksseitige Kommunikationsbereich durch die zweite Sendeeinrichtung (23) gebildet wird und einen Fahrzeuginnenbereich und einen Fahrzeugaußenbereich umfasst, der auf einer linken Seite des Fahrzeugs angeordnet ist.

3. Elektronikschlüsselsystem gemäß Anspruch 1 oder 2, wobei:
eine Vielzahl von elektronischen Schlüsseln in dem Fahrzeug registriert sind,
die Sendeeinrichtungen (22, 23) konfiguriert sind zum Versuchen einer ID-Verifikation mit jedem der elektronischen Schlüssel in einer vorbestimmten Reihenfolge, und
wenn einer der elektronischen Schlüssel die ID-Verifikation bewerkstelligt, die Sendeeinrichtungen konfiguriert sind zum Versuchen einer nächsten ID-Verifikation ab dem elektronischen Schlüssel, der eine ID-Verifikation bewerkstelligt hat.

4. Elektronikschlüsselsystem gemäß einem der Ansprüche 1 bis 3, wobei die Bedieneinrichtung (26, 28, 33) eine erste Bedieneinrichtung (26), die nahe einer Fahrerseitentür eingerichtet ist, und eine zweite Bedieneinrichtung (28), die nahe einer Beifahrerseitentür eingerichtet ist, umfasst.

5. Elektronikschlüsselsystem gemäß einem der Ansprüche 1 bis 4, wobei:
die fahrzeugeigene Vorrichtung eine Maschine-ECU (32) umfasst,
die Bedieneinrichtung (26, 28, 33) einen Maschinenschalter (33) umfasst, und
die Bestimmungseinrichtung (21b) konfiguriert ist zum Bestimmen, dass sich der elektronische Schlüssel innerhalb des Fahrzeugs befindet, wenn der Maschinenschalter (33) bedient wird, um die Maschine-ECU (32) zu betätigen, ein Bewerkstelligen einer ID-Verifikation aus dem Antwortergebnis des elektronischen Schlüssels in dem ersten Kommunikationsbereich bestimmt wird, und ein Bewerkstelligen einer ID-Verifikation aus dem Antwortergebnis des elektronischen Schlüssels in dem zweiten Kommunikationsbereich bestimmt wird.

6. Elektronikschlüsselsystem gemäß einem der Ansprüche 1 bis 4, wobei:
die fahrzeugeigene Vorrichtung eine Türschlossvorrichtung (34) ist, und
die Bestimmungseinrichtung (21b) konfiguriert ist zum Bestimmen, dass sich der elektronische Schlüssel nicht innerhalb des Fahrzeugs befindet, wenn die Bedieneinrichtung (26, 28) bedient wird, um die Türschlossvorrichtung (34) zu betätigen und eine Verriegelung durchzuführen, ein Bewerkstelligen einer ID-Verifikation aus dem Antwortergebnis des elektronischen Schlüssels in dem ersten Kommunikationsbereich bestimmt wird, und ein Nichtbewerkstelligen einer ID-Verifikation aus dem Antwortergebnis des elektronischen Schlüssels in dem zweiten Kommunikationsbereich bestimmt wird.

7. Elektronisches Schlüsselsystem gemäß einem der Ansprüche 1 bis 4, wobei:
die fahrzeugeigene Vorrichtung eine Türschlossvorrichtung (34) ist, und
die Bestimmungseinrichtung (21b) konfiguriert ist zum Bestimmen, dass der elektronische Schlüssel in dem Fahrzeug vergessen wurde, wenn die Bedieneinrichtung (26, 28) bedient wird, um die Türschlossvorrichtung (34) zu betätigen und eine Verriegelung durchzuführen, ein Bewerkstelligen einer ID-Verifikation aus dem Antwortergebnis des elektronischen Schlüssels in dem ersten Kommunikationsbereich bestimmt wird, und ein Bewerkstelligen einer ID-Verifikation aus dem Antwortergebnis des elektronischen Schlüssels in dem zweiten Kommunikationsbereich bestimmt wird.

## Revendications

1. Système de clé électronique pour un véhicule, le système de clé électronique comprenant :
une clé électronique (1) ;
une pluralité de moyens de transmission (22, 23) agencés dans le véhicule, dans lequel chacun des moyens de transmission est configuré pour transmettre une requête pour le démarrage d'une vérification d'identifiant à la clé électronique (1) et pour former une zone de communication comportant une région qui chevauche une partie d'une zone de communication formée par un autre des moyens de transmission, un des moyens de transmission (22) étant configuré pour former une première zone de communication (Ad) comportant une zone intérieure de véhicule et une première zone extérieure de véhicule, qui est formée au niveau d'un côté conducteur du véhicule, et un autre des moyens de transmission (23) étant configuré pour former une deuxième zone de communication (Ap) comportant une zone intérieure de véhicule et une deuxième zone extérieure de véhicule, qui est formée au niveau d'un côté passager du véhicule, dans lequel le système de clé électronique est configuré pour vérifier une combinaison de réponses provenant de la clé électronique demandée par la requête provenant de chacun des moyens de transmission pour réaliser la vérification d'identifiant tout en déterminant où la clé électronique est située ;
un moyen de fonctionnement (26, 28, 33) amené à fonctionner lors de l'actionnement d'un dispositif embarqué du véhicule, dans lequel le moyen de fonctionnement est configuré pour laisser transmettre la requête provenant d'un correspondant de la pluralité de moyens de transmission lorsque le moyen de fonctionnement fonctionne ; et
un moyen de détermination (21b) pour déterminer si la clé électronique est située ou non à l'extérieur du véhicule par réalisation d'une détermination d'extérieur de véhicule et pour déterminer si la clé électronique est située ou non à l'intérieur du véhicule par réalisation d'une détermination d'intérieur de véhicule, dans lequel
le moyen de détermination (21b) est configuré, pour réaliser la détermination d'extérieur de véhicule, pour laisser le moyen de transmission (22) correspondant au moyen de fonctionnement amené à fonctionner former la première zone de communication (Ad), lorsque le moyen de fonctionnement est amené à fonctionner, et pour déterminer si la vérification d'identifiant est accomplie ou non sur la base d'un résultat de réponse de la clé électronique dans la première zone de communication,
le moyen de détermination (21b) est configuré, pour réaliser la détermination d'intérieur de véhicule, pour laisser le moyen de transmission (22) correspondant au moyen de fonctionnement amené à fonctionner former la première zone de communication (Ad), lorsque le moyen de fonctionnement fonctionne, et pour déterminer si la vérification d'identifiant est accomplie ou non sur la base d'un résultat de réponse de la clé électronique dans la première zone de communication, et, après détermination de l'accomplissement de la vérification d'identifiant, pour laisser le moyen de transmission (23) qui diffère du moyen de transmission correspondant au moyen de fonctionnement amené à fonctionner former la deuxième zone de communication (Ap), et pour déterminer si la vérification d'identifiant est accomplie ou non sur la base d'un résultat de réponse de la clé électronique dans la deuxième zone de communication, et
le moyen de détermination (21b) est configuré pour déterminer que la clé électronique n'est pas située dans le véhicule lors de la détermination de l'accomplissement de la vérification d'identifiant à partir du résultat de réponse de la clé électronique dans la première zone de communication et du non-accomplissement de la vérification d'identifiant à partir du résultat de réponse de la clé électronique dans la deuxième zone de communication.

2. Système de clé électronique selon la revendication 1, dans lequel :
les moyens de transmission (22, 23) comportent un premier moyen de transmission (22), qui est agencé au niveau d'un côté du véhicule, et un deuxième moyen de transmission (23), qui est agencé au niveau d'un côté opposé du véhicule, et
la première zone de communication et la deuxième zone de communication comportent une zone de communication côté droit (Ad) et une zone de communication côté gauche (Ap), la zone de communication côté droit est formée par le premier moyen de transmission (22) et comporte une zone intérieure de véhicule et une zone extérieure de véhicule, qui est agencée au niveau d'un côté droit du véhicule, et la zone de communication côté gauche est formée par le deuxième moyen de transmission (23) et comporte une zone intérieure de véhicule et une zone extérieure de véhicule, qui est agencée au niveau d'un côté gauche du véhicule.

3. Système de clé électronique selon la revendication 1 ou 2, dans lequel :
une pluralité de clés électroniques est enregistrée dans le véhicule,
les moyens de transmission (22, 23) sont configurés pour tenter une vérification d'identifiant avec chacune des clés électroniques dans un ordre prédéterminé, et
lorsqu'une des clés électroniques accomplit la vérification d'identifiant, les moyens de transmission sont configurés pour tenter une vérification d'identifiant suivante à partir de la clé électronique qui a accompli la vérification d'identifiant.

4. Système de clé électronique selon l'une quelconque des revendications 1 à 3, dans lequel les moyens de fonctionnement (26, 28, 33) comportent un premier moyen de fonctionnement (26), qui est agencé de manière proximale par rapport à une porte côté conducteur, et un deuxième moyen de fonctionnement (28), qui est agencé de manière proximale par rapport à une porte côté passager.

5. Système de clé électronique selon l'une quelconque des revendications 1 à 4, dans lequel :
le dispositif embarqué comporte un bloc de commande électronique moteur (32),
les moyens de fonctionnement (26, 28, 33) comportent un interrupteur de moteur (33), et
le moyen de détermination (21b) est configuré pour déterminer que la clé électronique est située à l'intérieur du véhicule lorsque l'interrupteur de moteur (33) fonctionne pour actionner le bloc de commande électronique moteur (32), l'accomplissement de la vérification d'identifiant est déterminé à partir du résultat de réponse de la clé électronique dans la première zone de communication, et l'accomplissement de la vérification d'identifiant est déterminé à partir du résultat de réponse de la clé électronique dans la deuxième zone de communication.

6. Système de clé électronique selon l'une quelconque des revendications 1 à 4, dans lequel :
le dispositif embarqué est un dispositif de verrouillage de porte (34), et
le moyen de détermination (21b) est configuré pour déterminer que la clé électronique n'est pas située à l'intérieur du véhicule lorsque le moyen de fonctionnement (26, 28) fonctionne pour actionner le dispositif de verrouillage de porte (34) et réaliser un verrouillage, l'accomplissement de la vérification d'identifiant est déterminé à partir du résultat de réponse de la clé électronique dans la première zone de communication, et le non-accomplissement de la vérification d'identifiant est déterminé à partir du résultat de réponse de la clé électronique dans la deuxième zone de communication.

7. Système de clé électronique selon l'une quelconque des revendications 1 à 4, dans lequel :
le dispositif embarqué est un dispositif de verrouillage de porte (34), et
le moyen de détermination (21b) est configuré pour déterminer que la clé électronique a été oubliée dans le véhicule lorsque le moyen de fonctionnement (26, 28) fonctionne pour actionner le dispositif de verrouillage de porte (34) et réaliser un verrouillage, l'accomplissement de la vérification d'identifiant est déterminé à partir du résultat de réponse de la clé électronique dans la première zone de communication, et l'accomplissement de la vérification d'identifiant est déterminé à partir du résultat de réponse de la clé électronique dans la deuxième zone de communication.
